# EUROPÄISCHE PATENTSCHRIFT

(11) **EP 0 656 280 B1**
(45) Veröffentlichungstag und Bekanntmachung des Hinweises auf die Patenterteilung: **16.07.1997**
(21) Anmeldenummer: 94117255.3
(22) Anmeldetag: 02.11.1994
(51) Int. Cl.: B60Q 1/04

(54) **Halter für eine verstellbare Lagerung von Scheinwerfern, insbesondere Fahrzeugscheinwerfern**
Support for adjustable headlight particularly for vehicle
Support pour phare orientable en particulier pour véhicule

(30) Priorität: 22.11.1993 DE 4339687
(43) Veröffentlichungstag der Anmeldung: 07.06.1995
(73) Patentinhaber: Hella KG Hueck & Co., 59552 Lippstadt (DE)
(72) Erfinder: Szenci, Bela, A-1140 Wien (AT)

(56) Entgegenhaltungen:
- DE-A- 3 801 500
- DE-C- 4 126 112

## Beschreibung

Die Erfindung betrifft einen Halter für eine verstellbare Lagerung von Scheinwerfern, insbesondere Fahrzeugscheinwerfern, mit einem U-förmigen Bügel, dessen die beiden Schenkel verbindender Steg an einer Fahrzeugkarosserie festsetzbar ist, mit einem starr mit dem Scheinwerfer verbundenen Ansatz, welcher zwischen den Schenkeln des U-förmigen Bügels angeordnet ist und in welchen eine Durchgangsöffnung eingebracht ist, in welche ein starres und hülsenförmiges Distanzstück mit einer auf das Distanzstück aufgeschobenen elastischen Hülse eingesetzt ist, welche eine elastische Verbindung zwischen dem U-förmigen Bügel und dem Ansatz des Scheinwerfers herstellt, und mit einer quer zur optischen Achse des Scheinwerfers verlaufenden Schwenkachse, die von einem von den Schenkein getragenen Schraubenbolzen gebildet ist, der durch das hülsenförmige Distanzstück hindurchgeht und durch welchen das Distanzstück zwischen den Schenkein des U-förmigen Bügels klemmend eingefaßt ist.

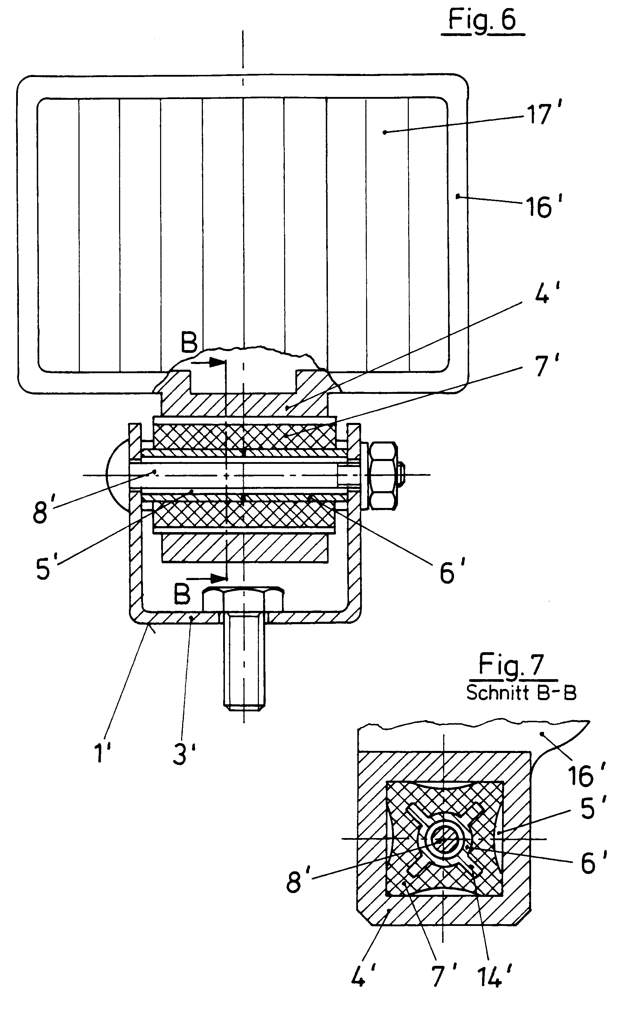

Ein solcher aus der Praxis bekannter Halter für eine verstellbare Lagerung von Scheinwerfern ist in der Zeichnung dargestellt, und zwar zeigt Fig. 6 einen mittleren vertikalen Schnitt durch den Halter, der einen als Arbeitsscheinwerfer dienenden Zusatzscheinwerfer trägt, und Fig. 7 einen Schnitt nach der Linie B-B der Figur 6. Hierbei ist ein Ansatz (4') an eine untere Seitenwand eines aus Kunststoff hergestellten topfförmigen Gehäuses (16') des Arbeitsscheinwerfers angeformt. Das topfförmige Gehäuse (16') ist durch eine lichtdurchlässige Abschlußscheibe (17') abgeschlossen, und in das von dem topfförmigen Gehäuse (16') und der Abschlußscheibe (17') gebildete Innere des Scheinwerfers ist ein nicht dargestellter Reflektor eingesetzt. Der an die untere Seitenwand des Gehäuses (16') angeformte Ansatz (4') ist durch eine in ihn eingebrachte Durchgangsöffnung (5') rohrförmig gestaltet und weist in seinem Querschnitt sowohl eine quadratische Innen- als auch Außenseite auf. In der Durchgangsöffnung (5') ist ein hülsenförmiges Distanzstück (6') angeordnet, welches aus Metall hergestellt ist und zwischen den Schenkeln (2') eines U-förmigen Bügels (3') klemmend eingefaßt ist. Die Größe der Klemmkraft hängt von dem Drehmoment ab, mit welcher ein Schraubenbolzen (8') montiert wird, welcher durch das hülsenförmige Distanzstück (6') und Öffnungen des Schenkels (2') des U-förmigen Halters (3') hindurch führt. An der Mantelfläche des hülsenförmigen Distanzstückes (6') sind vier in seiner Längsausdehnung verlaufende und gleichmäßig über seinen Umfang verteilte Rippen (14') angeformt. Auf das hülsenförmige Distanzstück (6') ist eine elastische Hülse (7') aufgeschoben, deren durch sie hindurchgehende Öffnung im Querschnitt dem Querschnitt des Distanzstückes (6') an seiner Außenseite entspricht. Die elastische Hülse (7') weist einen sternförmigen Querschnitt mit vier Zacken auf, mit welchem die Hülse (7') unter Vorspannung an den Eckbereichen der im Querschnitt quadratischen Durchgangsöffnung (5') des Ansatzes (4') anliegt. Die elastische Hülse (7') und das starre hülsenförmige Distanzstück (6') ragen mit ihren Endabschnitten aus der Durchgangsöffnung (5') des rohrförmigen Ansatzes (4') heraus, wobei das Distanzstück (6') länger ausgeführt ist als die elastische Hülse (7'). Deshalb besteht die durch die elastische Hülse (7') hergestellte elastische Verbindung ausschließlich zwischen dem hülsenförmigen Distanzstück (6') und dem Ansatz (4'). Der Ansatz (4') des Zusatzscheinwerfers ist drehfest mit dem starren Distanzstück (6') und somit zu dem U-förmigen Bügel hin verbunden, da die Distanzhülse (6') mit den Rippen (14') in entsprechende Schlitze in der Innenseite der elastischen Hülse eingreift und die elastische Hülse (7') mit ihren äußeren Zacken in die Ecken der im Querschnitt quadratischen Durchgangsöffnung (5') des Ansatzes (4') eingreift. Damit die elastische Verbindung zwischen der Distanzhülse (6') und dem Ansatz (4') spielfrei ist, muß das Distanzstück (6') mit Preßsitz in die elastische Hülse eingeschoben werden. Dieses Einschieben ist umständlich und zeitaufwendig, da das Distanzstück mit seinen Rippen in die entsprechenden Schlitze der Hülse einzufädeln ist, und eine hohe Kraft zum Einpressen des Distanzstückes in die elastische Hülse notwendig ist. Das Einpressen der elastischen Hülse (7') zusammen mit dem starren Distanzstück (6') ist wegen des schwierigen Einfädelns und der notwendigen großen Einpreßkraft noch umständlicher und zeitaufwendiger. In der Massenfertigung ist zum Einsetzen der elastischen Hülse (7') in die Durchgangsöffnung (5') eine aufwendige Vorrichtung notwendig. Um die elastische Hülse (7') montieren zu können, dürfen ihre radialen Außenabmessungen nicht wesentlich größer sein als die lichte Weite der Durchgangsöffnung (5') des Ansatzes (4'). Außerdem ist wegen des kleinen zusammengedrückten Wegs der elastischen Hülse (7') eine klapperfreie Halterung des Scheinwerfers an dem Halter bei gealtertem Werkstoff der elastischen Hülse nicht mehr sicher.

Aufgabe der Erfindung ist es, den im Oberbegriff des Anspruchs 1 beschriebenen Halter für eine verstellbare Lagerung von Scheinwerfern, insbesondere Fahrzeugscheinwerfern, derart zu gestalten, daß die elastische Hülse sowohl mit Spiel auf dem Schraubenbolzen aufschiebbar ist als auch mit Spiel in die Durchgangsöffnung einsetzbar ist und trotzdem die elastische Verbindung zwischen dem U-förmigen Bügel und dem starr mit dem Scheinwerfer verbundenen Ansatz ausreichend fest ist. Darüber hinaus soll nach der Montage des Halters die Größe der durch die elastische Verbindung bestehenden Schwingungsdämpfung auch dann immer gleich groß sein, wenn der Schraubenbolzen mit unterschiedlich großem Drehmoment montiert wird. Diese Aufgabe wird nach der Erfindung dadurch gelöst, daß die elastische Verbindung zwischen den Schenkeln des U-förmigen Bügels und des starr mit dem Scheinwerfer verbundenen Ansatzes durch mindestens zwei elastische Hülsen hergestellt ist, zwischen denen eine an die Innenseite der Durchgangsöffnung angeformte Schulter angeordnet ist, wobei jede elastische Hülse bei fester Anlage der Schenkel an dem hülsenförmigen Distanzstück zwischen einem der beiden Schenkel des U-förmigen Bügels und der Schulter des Ansatzes in Richtung der Schwenkachse zusammengedrückt ist. Nach der Montage des Halters sind die elastischen Hülsen immer genau um denselben Weg zusammengedrückt, da die Schenkel des U-förmigen Bügels durch den Schraubbolzen nur so weit zueinander bewegbar sind, bis sie das hülsenförmige Distanzstück zwischen sich klemmend einfassen. Die elastischen Hülsen können auch bei sehr hartem elastischen Werkstoff montiert werden, da sie sowohl mit Spiel auf das Distanzstück aufschiebbar als auch mit Spiel in die Durchgangsöffnung einsetzbar sind. Bei Untersuchungen ist festgestellt worden, daß bei einer Verwendung eines harten Gummis für die elastischen Hülsen nicht nur der Scheinwerfer im Fahrbetrieb weitestgehend vibrationsfrei getragen ist, sondern auch weiterhin die Lebensdauer der Lichtquelle sehr hoch ist, wenn als Lichtquelle eine Lampe mit einer Glühwendel dient und Stöße gegen den Scheinwerfer durch die elastische Verbindung absorbiert werden. Der Kräfteverlauf zwischen dem U-förmigen Bügel und dem Ansatz des Scheinwerfers erfolgt ausschließlich über die elastischen Hülsen, und von diesen zu einem großen Teil über die an die Innenseite der Durchgangsöffnung des Ansatzes angeformte Schulter.

Weiterhin ist es vorteilhaft, wenn die Schulter die Durchgangsöffnung in zwei gleich lange Teilstücke aufteilt, ringförmig gestaltet und umlaufend an die Innenseite der Durchgangsöffnung angeformt ist. Dadurch sind für beide Teilstücke dieselben elastischen Distanzstücke verwendbar, und die Anlagefläche der Schulter für die elastischen Hülsen kann so groß wie möglich ausgeführt sein. Hierbei ist die drehfeste Verbindung zwischen dem Scheinwerfer und der elastischen Hülse sehr sicher. Außerdem ist die Schulter, ohne zusätzliche feststellbare Werkzeugteile verwenden zu müssen, im Inneren der Durchgangsöffnung entformbar.

Vorteilhaft ist es weiterhin, wenn das Distanzstück mit Spiel durch den die Schulter aufweisenden Abschnitt der Durchgangsöffnung hindurchgeht und die elastischen Hülsen mit den den Schenkeln des U-förmigen Bügels zugewandten Endabschnitten aus der Durchgangsöffnung herausragen. Dadurch können bei schwingendem Scheinwerfer weder das Distanzstück noch die Schenkel des U-förmigen Bügels an den Ansatz anstoßen. Zudem ist der größte Teil der elastischen Hülsen im Inneren der Durchgangsöffnung vor Tageslicht geschützt angeordnet, wodurch sich der Alterungsprozeß der elastischen Hülsen sehr verlangsamt.

Von Vorteil ist es weiterhin, wenn zwischen den elastischen Hülsen und dem ihr benachbarten Schenkel des U-förmigen Bügels jeweils eine ringförmige Scheibe eingesetzt ist, welche das Distanzstück zwischen sich klemmend aufnehmen und welche die elastischen Hülsen zusammendrücken, ohne dabei an dem Ansatz des Scheinwerfers fest anzuliegen. Hierbei ist es weiterhin zweckmäßig, wenn das Distanzstück zweiteilig ausgeführt ist und jedes Teil des Distanzstückes gleich lang ist und einstückig mit der an ihn angrenzenden ringförmigen Scheibe aus Kunststoff hergestellt ist. Eine solche Lösung ist sehr kostengünstig herstellbar, da für die beiden Scheiben und den an sie angeformten Teil des Distanzstückes dasselbe Kunststoffteil verwendbar ist. Das hülsenförmige Kunststoffteil ist auch wesentlich preiswerter in seiner Herstellung als ein im Druckgußverfahren aus Metall hergestelltes hülsenförmiges Distanzstück. In diesem Zusammenhang ist es weiterhin vorteilhaft, wenn die Scheiben mit ihrem äußeren umlaufenden Rand die elastischen Hülsen radial überragen und umlaufend einen kleinen Abstand zu dem Ansatz aufweisen.

Bei einer besonders vorteilhaften Weiterbildung der Erfindung stellen ineinandergreifende Befestigungselemente sowohl zwischen der Hülse und der Schulter des Ansatzes als auch zwischen der Hülse und der an die Hülse angrenzenden Scheibe eine drehfeste Verbindung zwischen den Scheiben und dem Ansatz des Scheinwerfers her. Hierbei ist es zweckmäßig, wenn als Befestigungselemente radial verlaufende Schlitze und in die Schlitze eingreifende Rippen dienen, wobei in die elastischen Hülsen die Schlitze, und an die Schulter und die Scheiben die entsprechenden Rippen angeformt sind. Dadurch ist eine drehfeste Verbindung zwischen dem Scheinwerfer und dem U-förmigen Bügel sehr sicher. Die Verbindung ist selbst dann sehr drehfest, wenn die elastischen Hülsen aus einem weichen elastischen Werkstoff hergestellt sind.

Zudem ist es vorteilhaft, wenn die zwischen den Schenkeln des U-förmigen Bügels zusammengedrückten elastischen Hülsen mit ihrer Mantelfläche unter Vorspannung an die Innenseite der Durchgangsöffnung des Ansatzes anliegen. Dadurch erhöht sich nicht nur die drehfeste Verbindung zwischen dem Scheinwerfer und dem U-förmigen Bügel, und es ändert sich bei einem Stoß gegen den Scheinwerfer sein Schwingungsverhalten.

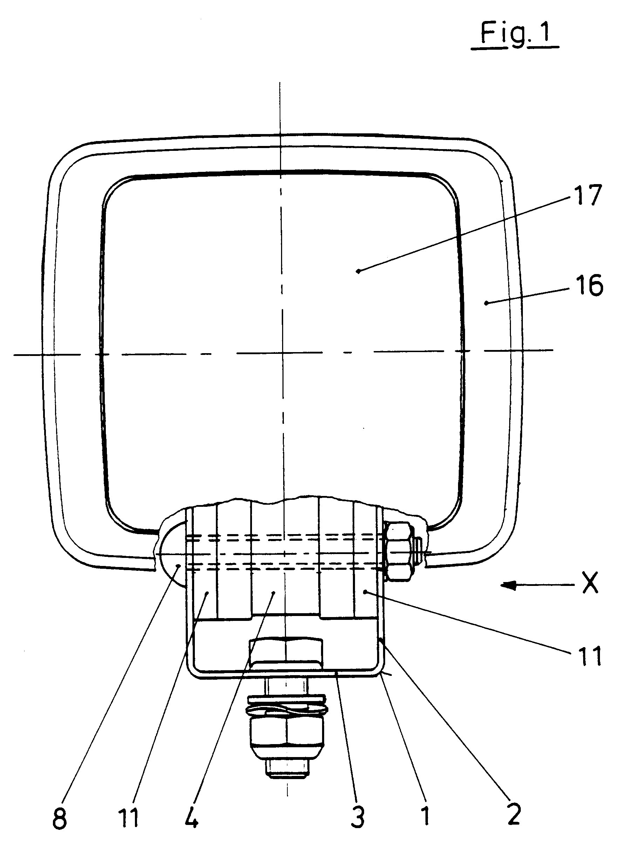

Ein Ausführungsbeispiel der Erfindung ist in der Zeichnung dargestellt, und zwar zeigt
- Fig. 1: in einer Vorderansicht einen Arbeitsscheinwerfer mit einem Halter, welcher an einer Fahrzeugkarosserie festsetzbar ist,

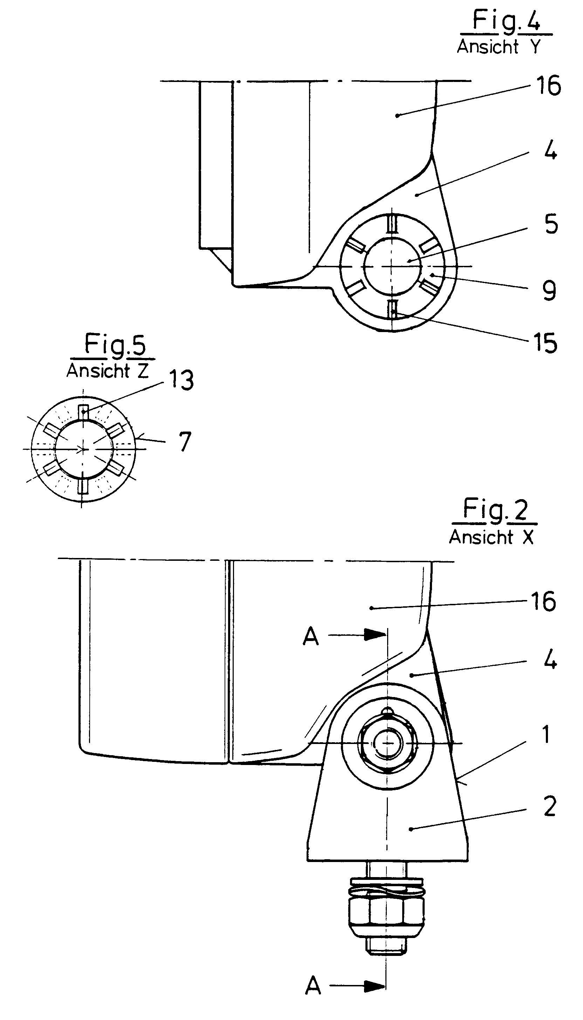

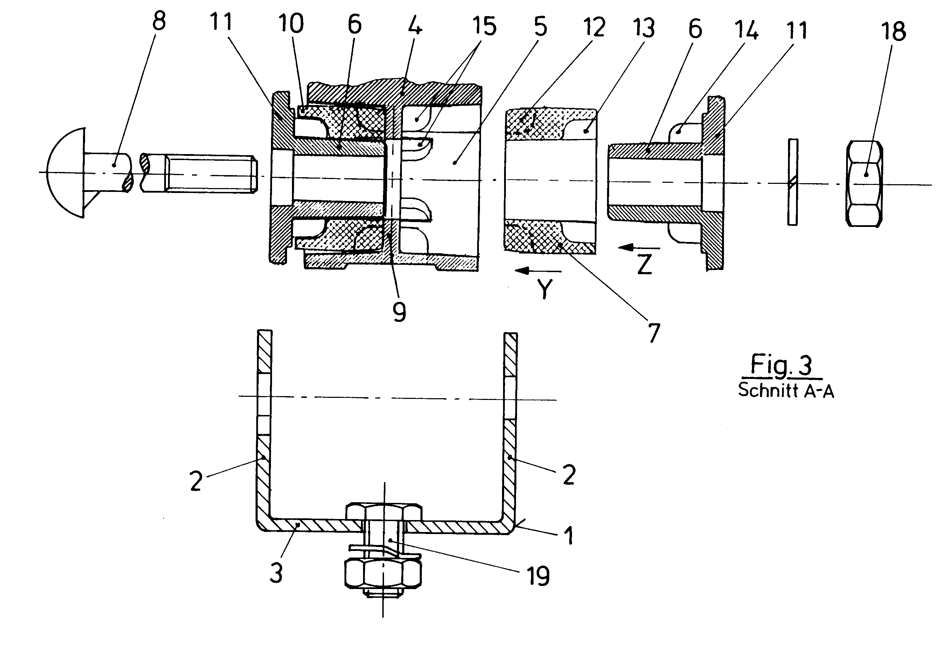

- Fig. 2: eine Ansicht aus Richtung X der Fig. 1 auf den Halter,
- Fig. 3: eine Explosionsdarstellung des Halters und
- Fig. 4: eine Ansicht aus Richtung Y der Fig. 3 ausschließlich auf einen mit dem Scheinwerfer starr verbundenen Ansatz und
- Fig. 5: eine Ansicht aus Richtung Z der Fig. 3 ausschließlich auf eine elastische Hülse, welche in eine Durchgangsöffnung des Ansatzes des Scheinwerfers einsetzbar ist.

Der Arbeitsscheinwerfer weist ein aus Kunststoff bestehendes topfförmiges Gehäuse (16) auf, welches durch eine lichtdurchlässige Abschlußscheibe (17) abgeschlossen ist. In das vom topfförmigen Gehäuse (16) und der lichtdurchlässigen Abschlußscheibe (17) gebildete Scheinwerferinnere ist ein nicht dargestellter Reflektor mit einer Glühlampe eingesetzt. Das topfförmige Gehäuse (16) ist an seiner unteren Seitenwand durch einen Halter mit einer nicht dargestellten Fahrzeugkarosserie verbindbar.

Der Halter weist einen an die untere Seitenwand des Gehäuses (16) angeformten rohrförmigen Ansatz (4) auf, dessen Längsachse quer zur optischen Achse des Scheinwerfers verläuft. Auf halber Länge des rohrförmigen Ansatzes (4) ist an die Innenseite seiner Durchgangsöffnung (5) umlaufend eine ringförmige Schulter (9) angeformt. An beiden Seiten der Schulter (9) liegt jeweils eine in die Durchgangsöffnung (5) des Ansatzes (4) eingesetzte Hülse (7), welche aus elastischem Werkstoff, wie z. B. Gummi, besteht, flächig an. Die lichte Weite der Durchgangsöffnung (5) im Bereich der Schulter (9) ist annähernd so groß wie die lichte Weite der elastischen Hülsen (7). Die an die Durchgangsöffnung (5) angrenzenden Außenseiten des Ansatzes (4) verlaufen parallel zueinander. Die elastischen Hülsen (7) sind, quer zu ihrer Längsachse gesehen, an ihrer Mantelfläche ballig ausgeführt und ragen mit ihren nach außen gerichteten Endabschnitten aus der Durchgangsöffnung (5) des Ansatzes (4) heraus. In die beiden elastischen Hülsen (7) ist von jeder offenen Seite der Durchgangsöffnung (5) her ein Teil eines hülsenförmigen Distanzstückes (6) eingeschoben, welches mit Spiel durch den die Schulter (6) aufweisenden Abschnitt der Durchgangsöffnung (5) hindurchgeht. Die beiden Teile des Distanzstückes (6) sind gleich groß und sind mit einer an der äußeren Stirnfläche der elastischen Hülse (7) flächig anliegenden ringförmigen Scheibe (11) einstückig aus Kunststoff hergestellt. An den vom Ansatz (4) weg weisenden Ringflächen der Scheiben (11) liegt ein Schenkel (2) eines aus Blech hergestellten U-förmigen Bügels (3) an. Ein Schraubenbolzen (8) ist durch Öffnungen der Schenkel (2) und durch die beiden Teile des hülsenförmigen Distanzstückes (6) hindurchgeführt, wobei zwischen den Distanzstücken (6) und dem Schraubenbolzen (8) wenig Spiel besteht. Der Schraubenbolzen (8) liegt an einem Schenkel (2) des U-förmigen Bügels (3) mit einem Kopf an und ragt aus der Öffnung des anderen Schenkels mit einem Gewindeschaft heraus, auf welchem eine Mutter unter Zwischenschaltung eines Sicherungsringes aufgedreht ist. Die Mutter (18) ist mit einem so großen Drehmoment zu montieren, bis die sich zugewandten Stirnflächen die beiden Teile des Distanzstückes aneinander liegen. Hierbei sind die elastischen Hülsen (7) zwischen der Schulter (9) des Ansatzes (4) und den Scheiben (11) in Richtung der Längsachse des Schraubenbolzens (8) zusammengedrückt. Die elastischen Hülsen können so stark zusammengedrückt sein, daß sie auch mit ihrer balligen Mantelfläche unter Vorspannung an der Innenseite der Durchgangsöffnung (5) anliegen. Damit eine sichere, drehfeste Verbindung zwischen dem Scheinwerfer und dem U-förmigen Bügel (3) des Halters gegeben ist, bestehen sowohl zwischen der Schulter (9) des Ansatzes (4) und den elastischen Hülsen (7) als auch zwischen den Scheiben (11) und den elastischen Hülsen (7) ineinandergreifende Befestigungselemente (11, 12, 13, 14). Die Befestigungselemente (11 und 14) sind radial verlaufende Rippen, wobei die Rippen (11) auf beiden Seiten der Schulter (9) angeformt sind und über ihre ringförmige Fläche gleichmäßig verteilt sind und wobei die Rippen (14) an die dem Ansatz (4) zugewandte ringförmige Fläche der Scheiben (11) und die Mantelfläche des Distanzstückes (6) angeformt sind und über die gesamte ringförmige Fläche gleichmäßig verteilt sind. Die Befestigungselemente (12 und 13) sind Schlitze, welche in die Endabschnitte der elastischen Hülse (7) eingebracht sind. Die Schlitze (12) der elastischen Hülse (7) sind in ihren äußeren Randbereich eingebracht und sind auf die Rippen (11) der Schulter (9) aufgeschoben. In die Schlitze (13) der elastischen Hülse (7) greifen die Rippen (14) der Scheiben (11) ein. Die Schlitze (13) sind in den inneren Randbereich der elastischen Hülse (7) eingebracht. Die ringförmigen Scheiben (11) überragen mit ihrem äußeren umlaufenden Rand die elastischen Hülsen (7) und bilden zusammen mit dem Ansatz (4) einen umlaufenden kleinen Spalt. In den die Schenkel (2) verbindenden Steg (3) des Halters (1) ist zentral eine Öffnung eingebracht, in welche eine zur Befestigung des Scheinwerfers an einer Fahrzeugkarosserie dienende Schraube (19) eingesetzt ist.

## Patentansprüche

1. Halter für eine verstellbare Lagerung von Scheinwerfern, insbesondere Fahrzeugscheinwerfern, mit einem U-förmigen Bügel (1), dessen die beiden Schenkel (2) verbindender Steg (3) an einer Fahrzeugkarosserie festsetzbar ist, mit einem starr mit dem Scheinwerfer verbundenen Ansatz (4), welcher zwischen den Schenkeln (2) des U-förmigen Bügels (1) angeordnet ist und in welchen eine Durchgangsöffnung (5) eingebracht ist, in welche ein starres und hülsenförmiges Distanzstück (6) mit einer auf das Distanzstück (6) aufgeschobenen elastischen Hülse (7) eingesetzt ist, welche eine elastische Verbindung zwischen dem U-förmigen Bügel (1) und dem Ansatz (4) des Scheinwerfers herstellt, und mit einer quer zur optischen Achse des Scheinwerfers verlaufenden Schwenkachse, die von einem von den Schenkeln (2) getragenen Schraubenbolzen (8) gebildet ist, der durch das hülsenförmige Distanzstück (6) hindurchgeht und durch welchen das Distanzstück (6) zwischen den Schenkeln (2) des U-förmigen Bügels (1) klemmend eingefaßt ist, dadurch gekennzeichnet, daß die elastische Verbindung zwischen den Schenkeln (2) des U-förmigen Bügels (1) und des starr mit dem Scheinwerfer verbundenen Ansatzes (4) durch mindestens zwei elastische Hülsen (7) hergestellt ist, zwischen denen eine an die Innenseite der Durchgangsöffnung (5) angeformte Schulter (9) angeordnet ist, wobei jede elastische Hülse (7) bei fester Anlage der Schenkel (2) an dem hülsenförmigen Distanzstück (6) zwischen einem der beiden Schenkel (2) des U-förmigen Bügels (1) und der Schulter (9) des Ansatzes (4) in Richtung der Schwenkachse zusammengedrückt ist.

2. Halter nach Anspruch 1, dadurch gekennzeichnet, daß das Distanzstück (6) mit Spiel durch den die Schulter (9) aufweisenden Abschnitt der Durchgangsöffnung (5) hindurchgeht.

3. Halter nach Anspruch 1 oder 2, dadurch gekennzeichnet, daß die elastischen Hülsen (7) mit Spiel auf das Distanzstück (6) aufgesetzt und mit Spiel in die Durchgangsöffnung (5) eingesetzt sind.

4. Halter nach einem der Ansprüche 1 bis 3, dadurch gekennzeichnet, daß die elastischen Hülsen (7) mit dem den Schenkeln (2) des U-förmigen Bügels (1) zugewandten Endabschnitt (10) aus der Durchgangsöffnung (5) herausragen.

5. Halter nach einem der Ansprüche 1 bis 4, dadurch gekennzeichnet, daß zwischen den elastischen Hülsen (7) und dem ihr benachbarten Schenkel (2) des U-förmigen Bügels (1) jeweils eine ringförmige Scheibe (11) eingesetzt ist, welche das Distanzstück (6) zwischen sich klemmend aufnehmen und zwischen welchen die elastischen Hülsen (7) zusammengedrückt sind, ohne dabei an dem Ansatz (4) des Scheinwerfers unmittelbar anzuliegen.

6. Halter nach einem der Ansprüche 1 bis 5, dadurch gekennzeichnet, daß das Distanzstück (6) zweiteilig ausgeführt ist und jedes Teil des Distanzstückes (6) gleich lang und einstückig mit der an ihn angrenzenden ringförmigen Scheibe (11) aus Kunststoff hergestellt ist.

7. Halter nach Anspruch 5 oder 6, dadurch gekennzeichnet, daß die Scheiben (11) mit ihrem äußeren umlaufenden Rand die elastischen Hülsen (7) radial überragen und umlaufend einen kleinen Abstand zu dem Ansatz (4) aufweisen.

8. Halter nach einem der Ansprüche 1 bis 7, dadurch gekennzeichnet, daß durch ineinandergreifende Befestigungselemente (12, 13, 14, 15) sowohl zwischen der Hülse (6) und der Schulter (9) des Ansatzes (4) als auch zwischen der Hülse (7) und der an die Hülse (7) angrenzenden Scheibe (11) eine drehfeste Verbindung zwischen den Scheiben (11) und dem Ansatz (4) des Scheinwerfers herstellt.

9. Halter nach Anspruch 8, dadurch gekennzeichnet, daß als Befestigungselemente ineinandergreifende Erhöhungen (11 bzw. 14) und Vertiefungen (12 bzw. 13) dienen.

10. Halter nach einem der Ansprüche 1 bis 9, dadurch gekennzeichnet, daß die zwischen den Schenkeln (2) des U-förmigen Bügels (3) zusammengedrückten elastischen Hülsen (7) mit ihrer Mantelfläche unter Vorspannung an der Innenseite der Durchgangsöffnung (5) des Ansatzes (4) anliegen.

## Claims

1. Holder for an adjustable fitting for headlamps, in particular vehicle headlamps, comprising a U-shaped yoke (1), its web (3) which connects both shanks (2) being seated on a vehicle body, an extension (4) which is rigidly connected to the headlamp and arranged between the shanks (2) of the U-shaped yoke (1) and into which is placed a throughbore (5) into which is inserted a rigid and sleeveshaped spacer (6), having pushed onto the spacer (6) an elastic sleeve (7) which establishes an elastic connection between the U-shaped yoke (1) and the extension (4) of the headlamp, and with a pivotal axis, which extends transversely to the optical axis of the headlamp and which is formed by a threaded bolt (8), which is carried by the shanks (2) and which passes through the sleeveshaped spacer (6) and by means of which the spacer (6) is clamped between the shanks (2) of the U-shaped yoke (1), **characterised in that** the elastic connection between the shanks (2) of the U-shaped yoke (1) and the extension (4) which is rigidly connected to the headlamp is established by at least two elastic sleeves (7) between which is arranged a shoulder (9) which is integrated with the inside of the throughbore (5), and with firm abutment of shanks (2) against the sleeveshaped spacer (6) between one of the two shanks (2) of the U-shaped yoke (1) and the should (9) of the extension (4), each elastic sleeve (7) is compressed in the direction of the pivotal axis.

2. Holder according to Claim 1, **characterised in that** the spacer (6) passes with play through the section of throughbore (5) which includes the shoulder (9).

3. Holder according to Claim 1 or 2, **characterised in that** the elastic sleeves (7) are seated with play onto the spacer (6) and are inserted with play into the throughbore (5).

4. Holder according to one of Claims 1 to 3, **characterised in that** the elastic sleeves (7) protrude from the throughbore (5) with the end section (10) which is facing towards the shanks (2) of the U-shaped yoke (1).

5. Holder according to one of Claims 1 to 4, **characterised in that** between the elastic sleeves (7) and adjacent shank (2) of the U-shaped yoke (1) is inserted a respective circular disc (11), which accommodates the spacer (6) thereinbetween in a clamped state and between which the elastic sleeves (7) are compressed without directly abutting the extension (4) of the headlamp.

6. Holder according to one of Claims 1 to 5, **characterised in that** the spacer (6) is designed in two parts, and each part of the spacer (6) is of equal length and integrated with its adjacent circular disc (11) of plastic.

7. Holder according to Claim 5 or 6, **characterised in that** the discs (11) radially protrude the elastic sleeves (7) with their outer peripheral edge and peripherally have a small gap to the extension (4).

8. Holder according to one of Claims 1 to 7, **characterised in that** a non-rotational connection is established between the discs (11) and the extension (4) of the headlamp by way of interengaging fixing elements (12, 13, 14, 15) between both the sleeve (6) and the shoulder (9) of the extension (4) and between the sleeve (7) and the disc (11) adjacent sleeve (7).

9. Holder according to Claim 8, **characterised in that** interengaging peaks (11 or 14) or troughs (12 or 13) serve a fixing elements.

10. Holder according to one of Claims 1 to 9, **characterised in that** the elastic sleeves (7) which are compressed between the shanks (2) of the U-shaped yoke (3) are pretensionally seated with the casing surface on the inside of the throughbore (5) of the extension (4).

## Revendications

1. Support pour un montage réglable de phares, en particulier de phares de véhicules, comportant un étrier (1) en forme de U dont l'âme (3) reliant les deux branches (2) est susceptible d'être fixée sur une carrosserie de véhicule, une embase (4) reliée rigidement au phare, laquelle est agencée entre les branches (2) de l'étrier (1) en forme de U et dans laquelle est ménagée une ouverture de passage dans laquelle une pièce d'écartement (6) rigide et en forme de douille est mise en place avec une douille élastique (7) enfilée sur la pièce d'écartement (6), ladite douille formant une liaison élastique entre l'étrier (1) en forme de U et l'embase (4) du phare, et comportant un axe de pivotement s'étendant transversalement à l'axe optique du phare, ledit axe étant formé par un boulon fileté (8) porté par l'une des branches (2) et traversant la pièce d'écartement (6) en forme de douille et à travers lequel la pièce d'écartement (6) est enchâssée par serrage entre les branches (2) de l'étrier (1) en forme de U, caractérisé en ce que la liaison élastique entre les branches (2) de l'étrier (1) en forme de U et l'embase (4) reliée au phare est réalisée par au moins deux douilles élastiques (7) entre lesquelles est agencé un épaulement (9) formé sur la face intérieure de l'ouverture de passage (5), chaque douille élastique (7) étant pressée en direction de l'axe de pivotement entre l'une des deux branches (2) de l'étrier (1) en forme de U et l'épaulement (9) de l'embase (4), lorsque les branches (2) sont en appui fixe sur la pièce d'écartement (6) en forme de douille.

2. Support selon la revendication 1, caractérisé en ce que la pièce d'écartement (6) traverse avec jeu le tronçon de l'ouverture de passage (5) qui présente l'épaulement (9).

3. Support selon l'une ou l'autre des revendications 1 et 2, caractérisé en ce que les douilles élastiques (7) sont enfilées avec jeu sur la pièce d'écartement (6) et sont mises en place avec jeu dans l'ouverture de passage (5).

4. Support selon l'une quelconque des revendications 1 à 3, caractérisé en ce que les douilles élastiques (7) font saillie hors de l'ouverture de passage (5) avec le tronçon d'extrémité (10) orienté vers les branches (2) de l'étrier (1) en forme de U.

5. Support selon l'une quelconque des revendications 1 à 4, caractérisé en ce qu'entre les douilles élastiques (7) et la branche de l'étrier (1) en forme de U qui leur est voisine, sont placées des rondelles (11) respectives qui reçoivent entre elles par serrage la pièce d'écartement (6) et entre lesquelles les douilles élastiques (7) sont pressées sans reposer directement sur l'embase (4) du phare.

6. Support selon l'une quelconque des revendications 1 à 5, caractérisé en ce que la pièce d'écartement (6) est réalisée en deux parties et en ce que chaque partie de la pièce d'écartement (6) a la même longueur et est réalisée en matière plastique d'une seule pièce avec la rondelle (11) qui lui est adjacente.

7. Support selon l'une ou l'autre des revendications 5 et 6, caractérisé en ce que les rondelles (11) dépassent radialement les douilles élastiques (7) avec leur bord périphérique extérieur et présentent à la périphérie un faible écartement par rapport à l'embase (4).

8. Support selon l'une quelconque des revendications 1 à 7, caractérisé en ce qu'une liaison solidaire en rotation entre les rondelles (11) et l'embase (4) du phare est réalisée grâce à des éléments de fixation s'engrenant les uns dans les autres (12, 13, 14, 15) non seulement entre la douille (6) et l'épaulement (9) de l'embase (4), mais aussi entre la douille (7) et la rondelle (11) adjacente à la douille (7).

9. Support selon la revendication 8, caractérisé en ce que des reliefs (11, 14) et des creux (12, 13) respectifs servent d'éléments de fixation s'engrenant les uns dans les autres.

10. Support selon l'une quelconque des revendications 1 à 9, caractérisé en ce que les douilles élastiques (7) pressées entre les branches (2) de l'étrier (1) en forme de U reposent avec leur surface enveloppe sous précontrainte contre la face intérieure de l'ouverture de passage (5) de l'embase (4).
